# EUROPÄISCHE PATENTSCHRIFT

(11) **EP 4 299 243 B1**
(45) Veröffentlichungstag und Bekanntmachung des Hinweises auf die Patenterteilung: **08.07.2026**
(21) Anmeldenummer: 23182455.8
(22) Anmeldetag: 29.06.2023
(51) Int. Cl.: B23Q 15/22, B23B 7/12, G05B 19/19, B23B 25/06

(54) **DREHMASCHINE MIT AUTOMATISCHER BREMSVORRICHTUNG**
LATHE WITH AUTOMATIC BRAKE UNIT
TOUR AVEC UN DISPOSITIF DE FREINAGE AUTOMATIQUE

(30) Priorität: 01.07.2022 DE 102022116505
(43) Veröffentlichungstag der Anmeldung: 03.01.2024
(73) Patentinhaber: WEILER Werkzeugmaschinen GmbH, 91448 Emskirchen (DE)
(72) Erfinder: Kohl, Günter, 91564 Neuendettelsau (DE); Eckardt, Markus, 91617 Oberdachstetten (DE)
(74) Vertreter: Mielke, Klaus

(56) Entgegenhaltungen:
- EP-A2- 3 434 399
- DE-B3- 102014 221 725
- DE-C1- 3 938 851

## Beschreibung

Die Erfindung betrifft eine Drehmaschine gemäß dem Patentanspruch 1.

Konventionelle Drehmaschinen, die auf eine handgeführte Bearbeitung von Werkstücken ausgerichtet sind, weisen Handräder zum manuellen Verfahren der Schlitten entlang der Bearbeitungsachsen auf. Dabei können konventionelle Drehmaschinen zur Unterstützung eines Bedieners Bremsvorrichtungen aufweisen, die der Drehung eines Handrads für eine Bearbeitungsachse entgegenwirken. So kann einem Bediener durch Erzeugung einer Schwergängigkeit ein Gefühl für die während einer Bearbeitung auf das Werkzeug wirkende Belastung vermittelt werden. Eine solche Drehmaschine ist beispielhaft aus der DE 39 38 851 C1 bekannt.

Weiterhin können konventionelle Drehmaschinen, die auf eine handgeführte Bearbeitung von Werkstücken ausgerichtet sind, so ausgeführt sein, dass damit eine maschinell unterstützte Herstellung einer Schrägfläche möglich ist. Dies kann beispielhaft dadurch erfolgen, dass der Schlitten entlang einer ersten Bearbeitungsachse durch einen Bediener manuell bewegt wird und der Schlitten entlang einer zweiten Bearbeitungsachse durch die Steuerung, in der ein Datensatz für den Verlauf der Schräge hinterlegt ist, konturtreu motorisch nachgeführt wird. Auf diese Weise wird durch Überlagerung der Achsbewegungen die Schrägfläche an einem Werkstück hergestellt. Eine solche Drehmaschine ist beispielhaft aus der DE 10 2014 221 725 B3 bekannt.

Bei der handgeführten, maschinell unterstützten Herstellung einer Schrägfläche mittels einer derartigen konventionellen Drehmaschine kann es insbesondere bei der Herstellung von Schrägflächen mit einem sehr spitzen bzw. flachen Kegelwinkel notwendig sein, dass ein Schlitten entlang der motorisch nachgeführten Achse zur Aufrechterhaltung des konturtreuen Bewegungsverhältnisses zu der manuell verfahrbaren Achse mit einer hohen Geschwindigkeit nachgeführt werden muss. Dabei tritt insbesondere bei konventionellen Drehmaschinen, deren maximale Achsgeschwindigkeit aus Sicherheitsgründen begrenzt ist, das Problem auf, dass der Schlitten der motorisch verfahrbaren Achse der Bewegung des Schlittens der manuell verfahrbaren Achse nicht mit ausreichend hoher Geschwindigkeit nachgeführt werden kann, sodass eine unerwünschte Abweichung der Kontur des Werkstücks von der in dem Datensatz beschriebenen Schräge auftritt. Ein solches Werkstück weist somit nicht die gewünschte Genauigkeit auf.

Der Erfindung liegt daher die Aufgabe zu Grunde, eine Drehmaschine aufzuzeigen, mit der eine handgeführte Herstellung einer Schrägfläche mit einer höheren Genauigkeit möglich ist.

Die Aufgabe wird gelöst mit den kennzeichnenden Merkmalen von Patentanspruch 1. Weitere vorteilhafte Ausgestaltungen der Erfindung sind in den Unteransprüchen angegeben.

Die Drehmaschine weist auf einen ersten Schlitten, der durch Drehung eines Handrads entlang einer ersten Achse manuell verfahrbar ist, ein Messsystem für die Ist-Position des ersten Schlittens entlang der ersten Achse, einen zweiten Schlitten, der entlang einer zweiten Achse quer zu der ersten Achse motorisch verfahrbar ist, und eine Steuerung, die einen Datensatz für den Verlauf einer Schräge in der von der ersten und zweiten Achse aufgespannten Ebene enthält, unter Berücksichtigung des Datensatzes abhängig von der Ist-Position des ersten Schlittens entlang der ersten Achse Soll-Positionen für den zweiten Schlitten entlang der zweiten Achse ableitet und diesen dorthin automatisch nachführt. Gemäß der Erfindung weist die Drehmaschine eine Bremsvorrichtung zur Einwirkung auf die Drehung des Handrads auf, wobei die Steuerung die Einwirkung der Bremsvorrichtung abhängig von der Abweichung zwischen der Ist-Position und der Soll-Position des zweiten Schlittens entlang der zweiten Achse steuert.

Die Schlitten können auf dem Maschinenbett der Drehmaschine übereinander angeordnet und jeweils entlang einer Achse verfahrbar sein. Dabei ist der erste Schlitten entlang der ersten Achse durch Drehung eines Handrads durch einen Bediener manuell und quer dazu der zweite Schlitten entlang der zweiten Achse mittels eines Antriebs, z.B. eines Linearantriebs oder eines mit einem Elektromotor angetriebenen Getriebes, motorisch verfahrbar.

Das Handrad kann als konventionelles Handrad, das über ein Getriebe mit einer Bewegungsachse des Schlittens mechanisch gekoppelt ist, oder als elektronisches Handrad, dessen Drehung elektronisch erfasst und dann durch einen Motor auf die Bewegungsachse ausgeübt wird, ausgeführt sein. Die Bremsvorrichtung wirkt auf das Handrad, bzw. auf eine damit rotatorisch gekoppelte Komponente, das an einer Drehmaschine oder an einem Schlitten zum manuellen Verfahren des Schlittens entlang der ersten Achse vorgesehen ist, ein. Die Bremsvorrichtung kann mit dem Handrad dauerhaft rotatorisch gekoppelt sein oder bei Bedarf an das Handrad ankoppelbar sein. Die Bremsvorrichtung ist so ausgeführt, dass die erzeugte Bremswirkung einer manuellen Drehung eines Handrads durch einen Bediener entgegenwirkt. Auf diese Weise ist die manuelle Drehung des Handrads und somit die Art und Geschwindigkeit des Verfahrens des Schlittens entlang der ersten Achse manipulierbar.

Mittels des Messsystems wird die Ist-Position des ersten Schlittens entlang der ersten Achse erfasst. Das Messsystem kann z.B. als direktes Messsystem mit Maßstäben und Messköpfen oder als indirektes Messsystem mit Drehgebern ausgeführt sein. Die erfasste aktuelle Ist-Position des Schlittens ist von der Steuerung erfass- und verarbeitbar.

Die Steuerung ist so ausgestaltet, dass diese in Reaktion auf gemessene Ist-Positionen des erstens Schlittens entlang der durch einen Bediener manuell verfahrbaren ersten Achse den Antrieb des zweiten Schlittens so ansteuert, dass dieser entlang der motorisch verfahrbaren zweiten Achse automatisch nachgeführt wird.

Hierfür enthält die Steuerung einen Datensatz, der den Verlauf einer Schräge in der von der manuell verfahrbaren und der motorisch angetriebenen Achse aufgespannten Ebene beschreibt. Der Datensatz definiert somit den geometrischen Zusammenhang zwischen den beiden Achsen. Der Datensatz kann in der Art einer mathematischen Funktion eine Abbildungsvorschrift zur Bestimmung von Positionen für die motorisch verfahrbare Achse in Abhängigkeit von Positionen der manuell verfahrbaren Achse oder Koordinatenpaare einer Vielzahl von Einzelpunkten, die die Schräge bilden, enthalten.

Während des manuellen Verfahrens des ersten Schlittens durch einen Bediener entlang der manuell verfahrbaren ersten Achse ermittelt die Steuerung in jedem Arbeitszyklus für jede erfasste Ist-Position des ersten Schlittens unter Anwendung des Datensatzes eine zugehörige Position für den zweiten Schlitten entlang der motorisch verfahrbaren zweiten Achse. Die Steuerung steuert den Antrieb des zweiten Schlittens so, dass dieser entlang der motorisch verfahrbaren zweiten Achse von der jeweils letzten Position zu der nachfolgenden ermittelten Position nachgeführt wird. Auf diese Weise wird ein Drehwerkzeug durch Überlagerung des manuellen und angetriebenen Verfahrens zweidimensional gemäß der in dem Datensatz beschriebenen Schräge bewegt. So ist an einem in der Drehmaschine gehaltenen und rotierendem Werkstück eine Schrägfläche herstellbar. Eine derartige Schrägfläche kann eine geradlinige Kegelfläche, eine gekrümmte Kugelfläche oder auch eine andersartig geschwungene Formfläche sein.

Gemäß der Erfindung steuert dabei die Steuerung die Einwirkung der Bremsvorrichtung abhängig von der Abweichung zwischen der gemessenen Ist-Position und der abgeleiteten Soll-Position des zweiten Schlittens entlang der zweiten Achse. Unter Abweichung wird allgemein das Ausmaß des Unterschieds zwischen Ist- und Sollposition verstanden. Diese kann von der Steuerung automatisch bestimmt und anschließend zur Ableitung einer Einwirkung der Bremsvorrichtung verarbeitet.

Auf diese Weise ist die Einwirkung der Bremsvorrichtung auf die manuelle Drehung eines Handrads in Abhängigkeit der Ist-Position und der hinterlegten Abweichung automatisiert und gezielt steuerbar. Es sind so vorteilhaft genaue und zielgerichtete Eingriffe auf die Einwirkung der Bremsvorrichtung unabhängig von einem Bediener möglich. Insbesondere bei der handgeführten, maschinell unterstützten Herstellung einer Schrägfläche kann auf diese vorteilhaft automatisch in Abhängigkeit der Abweichung der Ist-Positionen von der gewünschten Soll-Position eine Bremswirkung auf das Handrad des manuell verfahrbaren ersten Schlittens ausgeübt werden. Dadurch wird vorteilhaft die erzielte Genauigkeit der Schrägfläche verbessert. Besonders vorteilhaft korreliert die Abweichung mit einer zulässigen bzw. gewünschten Toleranzintervalls bei der Herstellung einer Schrägfläche.

Gemäß einer weiteren vorteilhaften Ausführung der Erfindung steuert die Steuerung die Einwirkung der Bremsvorrichtung derart, dass diese mit der Abweichung zwischen der Ist-Position und der Soll-Position des zweiten Schlittens entlang der zweiten Achse ansteigt. Zweckmäßig erfolgt die Steuerung der Einwirkung der Bremsvorrichtung derart, dass die Einwirkung mit steigender Abweichung ebenfalls ansteigt. So wird bei einer hohen Abweichung eine hohe Bremswirkung auf das Handrad ausgeübt, sodass die Geschwindigkeit der Drehung des Handrads reduziert wird. Auf diese Weise wird vorteilhaft die Gefahr einer unerwünscht hohen Abweichung der Werkstückkontur von der vorgegebenen Schräge reduziert. Dadurch wird vorteilhaft die bei einer manuellen Bearbeitung eines Werkstücks erzielte Genauigkeit verbessert.

Bei einer weiteren vorteilhaften Ausführung der Erfindung enthält die Steuerung einen Maximalwert für die Abweichung zwischen der Ist-Position und der Soll-Position des zweiten Schlittens entlang der zweiten Achse und steuert die Einwirkung der Bremsvorrichtung derart, dass die Abweichung zwischen der Ist-Position und der Soll-Position des zweiten Schlittens entlang der zweiten Achse den Maximalwert nicht überschreitet. Hierfür erfolgt bei Annäherung der Ist-Abweichung an den vorgegebenen Maximalwert eine Erhöhung der Einwirkung der Bremsvorrichtung in einem Ausmaß, dass eine weitere Erhöhung der Geschwindigkeit der Drehung des Handrads für die manuell verfahrbare erste Achse nicht mehr möglich ist. Dabei kann die Einwirkung durch die Steuerung derart erhöht werden, dass das Handrad stillgesetzt wird. Auf diese Weise wird eine unerwünschte Überschreitung des Maximalwerts der Abweichung des zweiten Schlittens entlang der motorisch verfahrbaren zweiten Achse zuverlässig vermieden. Auf diese Weise wird insbesondere die Überschreitung eines zulässigen bzw. gewünschten Toleranzintervalls bei der handgeführten, maschinell unterstützten Herstellung einer Schrägfläche vermieden und so vorteilhaft die erzielte Genauigkeit verbessert.

In einer weiteren vorteilhaften Ausführung der Erfindung ist die Abweichung die Differenz aus der Ist-Position und der Soll-Position des zweiten Schlittens entlang der zweiten Achse. Die Abweichung ist somit die durch Subtraktion gebildete mathematische Differenz aus Ist- und Soll-Position des zweiten Schlittens. Dies ist eine einfache und zuverlässige Weise zur Bestimmung der Abweichung, sodass die Gefahr von Fehlern bei der Bestimmung der Abweichung reduziert und somit vorteilhaft die Genauigkeit bei der handgeführten, maschinell unterstützten Herstellung einer Schrägfläche weiter verbessert wird. In einer weiteren vorteilhaften Ausführung der Erfindung ist die Abweichung ein durch Division gebildeter mathematischer Quotient der Positionen.

Gemäß einer weiteren vorteilhaften Ausführung der Erfindung verläuft die erste Achse entlang einer Mittelachse einer Hauptspindel der Drehmaschine. Die erste Achse verläuft somit entlang der Bewegungsrichtung des sogenannten Bettschlittens und/oder entlang der Bewegungsrichtung des sogenannten Oberschlittens einer konventionellen Drehmaschine. Diese Achszuordnung ermöglicht es einem Bediener, sich während der Drehung des Handrads bequem mit dem ersten Schlitten entlang des Maschinenbetts der Drehmaschine zu bewegen, sodass der Abstand zur Drehmaschine weitgehend gleichmäßig gehalten werden kann. Auf diese Weise kann die Drehbewegung von einem Bediener besonders ergonomisch und gleichmäßig auf das Handrad ausgeübt werden. Dadurch wird vorteilhaft die bei einer handgeführten, maschinell unterstützten Herstellung einer Schrägfläche erzielte Genauigkeit verbessert.

Bei einer weiteren vorteilhaften Ausführung der Erfindung weist die Drehmaschine eine magnetischen Bremsvorrichtung auf. Eine derartige Bremsvorrichtung ist vorteilhaft einfach aufgebaut und ist aufgrund der dauerhaft wirkenden Magnetkraft bereits ohne die Bereitstellung von Hilfsenergie benutzbar. Mit einer derartigen Bremsvorrichtung ist vorteilhaft auf technisch einfache Weise eine erfindungsgemäße Drehmaschine herstellbar. Weiterhin weisen derartige Bremsvorrichtungen eine gute Regelbarkeit auf, sodass deren Einwirkung präzise kontrollierbar ist. Dadurch wird vorteilhaft die bei einer handgeführten, maschinell unterstützten Herstellung einer Schrägfläche erzielte Genauigkeit verbessert.

In einer weiteren vorteilhaften Ausführung der Erfindung weist die Drehmaschine eine Magnetpulverbremse als magnetische Bremsvorrichtung auf. Eine derartige Bremsvorrichtung ist auf einfache Weise stabil und präzise regelbar, weist eine hohe Bremswirkung bei hoher Verschleißfestigkeit auf und ermöglicht die Aufbringung einer gleichmäßigen dauerhaften Bremswirkung auch bei sehr niedrigen Drehzahlen, sodass deren Einwirkung präzise kontrollierbar ist. Dadurch wird vorteilhaft die bei einer handgeführten, maschinell unterstützten Herstellung einer Schrägfläche erzielte Genauigkeit verbessert.

Gemäß einer weiteren vorteilhaften Ausführung der Erfindung weist die Drehmaschine eine Zugspindel auf. Eine Drehmaschine mit einer Zugspindel wird als "konventionelle Drehmaschine" oder "handbediente Drehmaschine" bezeichnet. Auf einer derartigen Drehmaschine erfolgt überwiegend eine manuelle Bearbeitung von Werkstücken durch einen Bediener. Somit ist die Erfindung insbesondere zum Einsatz in einer derartigen Drehmaschine geeignet. Dadurch wird vorteilhaft die bei einer handgeführten, maschinell unterstützten Herstellung einer Schrägfläche auf einer konventionellen Drehmaschine erzielte Genauigkeit verbessert.

Die Erfindung und weitere vorteilhafte Ausführungen derselben werden anhand der kurz angeführten Figuren nachfolgend näher erläutert. Dabei zeigen
- Fig. 1: eine beispielhafte, gemäß der Erfindung ausgeführte Drehmaschine D in einer schematischen Draufsicht,
- Fig. 2: ein schematisches Diagramm der Signalverbindungen der Messsensoren M12, M22, M32, der Steuerung D3, des Datenspeichers D31, des Elektromotors D21 und der Bremsvorrichtungen S13, S23, S33,
- Fig. 3: ein Diagramm des Bremsmoments MB in Abhängigkeit der Koordinate x mit beispielhaften Kennlinien V1, V2, V3,
- Fig. 4: eine schematische abschnittsweise Skizze der Bearbeitung des Werkstücks W in einer erfindungsgemäßen Drehmaschine, und
- Fig. 5: das schematische Blockschaltbild der Funktionsweise der Steuerung D3 bei der Bearbeitung des Werkstücks W.

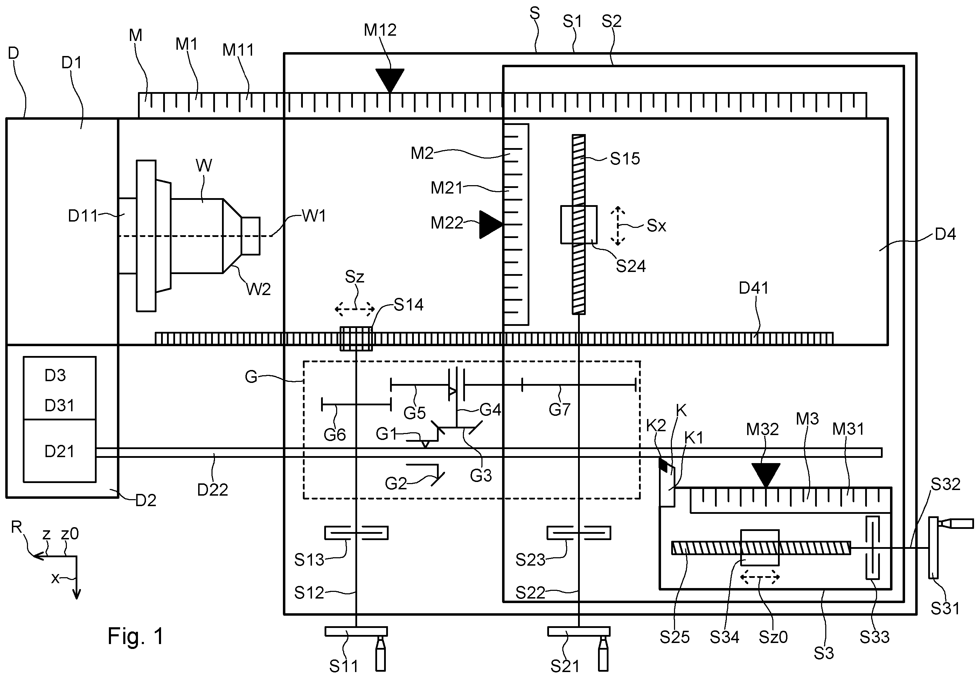

Die vorteilhafte, gemäß der Erfindung ausgeführte Drehmaschine D ist in Fig. 1 schematisch dargestellt. Die Figur zeigt eine Draufsicht auf den Spindelstock D1 und das Maschinenbett D4. In dem Spindelstock D1 ist eine Hauptspindel D11 drehbar gelagert, in deren Spannmittel das Werkstück W eingespannt ist. Dieses ist um die Mittelachse W1 rotierbar und weist als Bearbeitungskontur W2 eine Kegelkontur auf.

Die Drehmaschine D weist weiterhin einen Vorschubantrieb D2 auf, der in der schematischen Darstellung von Fig. 1 zur Verbesserung der Sichtbarkeit neben dem Spindelstock D1 angeordnet ist. Der Vorschubantrieb D2 weist einen regelbaren Elektromotor D21 auf. Dieser treibt eine Zugspindel D22 an, die parallel zu dem Maschinenbett D4 verläuft und in Fig. 1 schematisch neben diesem dargestellt ist.

Die Drehmaschine D weist auf dem Maschinenbett D4 einen Werkzeugschlitten S auf. Dieser weist drei übereinander angeordnete und jeweils quer zueinander verfahrbare Teilschlitten auf. Der Bettschlitten S1 ist unmittelbar auf dem Maschinenbett D4 angeordnet und in der Verfahrrichtung Sz entlang der z-Achse z des Koordinatensystems R der Drehmaschine D verfahrbar. Auf dem Bettschlitten S1 ist der Planschlitten S2 angeordnet, der quer zu dem Bettschlitten S1 in der Verfahrrichtung Sx entlang der x-Achse x verfahrbar ist. Auf dem Planschlitten S2 ist der Oberschlitten S3 angeordnet, der quer zu dem Planschlitten S2 in der Verfahrrichtung Sz0 entlang der z0-Achse z0 verfahrbar ist. Die z0-Achse z0 verläuft dabei in derselben Richtung wie die z-Achse z. Auf dem Oberschlitten S3 ist ein Drehwerkzeug K gehalten. Dieses ist in dem vorteilhaften Ausführungsbeispiel einer erfindungsgemäßen Drehmaschine D als Werkzeughalter K1 mit Schneidplatte K2 ausgeführt. Das Drehwerkzeug K ist mittels des Werkzeugschlittens S in der von der z-Achse z und x-Achse x aufgespannten Arbeitsebene zweidimensional verfahrbar. Der Bettschlitten S1, der Planschlitten S2 und der Oberschlitten S3 sind in Fig. 1 jeweils nur schematisch als Rechteck dargestellt.

Für ein manuelles Verfahren der Schlitten entlang der jeweiligen Achsen durch einen Bediener weist die Drehmaschine D Handräder auf. Der Bettschlitten S1 ist über ein erstes Handrad S11 in der Verfahrrichtung Sz entlang der z-Achse z verfahrbar. Eine Drehung des ersten Handrads S11 wird über eine damit verbundene erste Welle S12 auf ein erstes Zahnrad S14 übertragen, das mit einer am Maschinenbett D4 angeordneten Zahnstange D41 in kämmendem Eingriff ist. Durch das Abrollen des ersten Zahnrads S14 an der feststehenden Zahnstange D41 wird der Bettschlitten S1 entlang der z-Achse z verfahren.

Der auf dem Bettschlitten S1 angeordnete Planschlitten S2 ist über ein zweites Handrad S21 in der Verfahrrichtung Sx entlang der x-Achse x verfahrbar. Eine Drehung des zweiten Handrads S21 wird über eine damit verbundene zweite Welle S22 auf eine erste Gewindespindel S15 mit einer ersten Gewindemutter S24 übertragen. Die erste Gewindespindel S15 ist drehbar auf dem Bettschlitten S1 gehalten, wobei die erste Gewindemutter S24 drehfest mit dem Planschlitten S2 verbunden ist. Durch Drehung der ersten Gewindespindel S15 in der feststehenden ersten Gewindemutter S24 erfolgt eine axiale Verschiebung der ersten Gewindemutter S24 entlang der ersten Gewindespindel S15 und somit ein Verfahren des Planschlittens S2 entlang der x-Achse x.

Der auf dem Planschlitten S2 angeordnete Oberschlitten S3 ist über ein drittes Handrad S31 in der Verfahrrichtung Sz0 entlang der z0-Achse verfahrbar. Eine Drehung des dritten Handrads S31 wird über eine damit verbundene dritte Welle S32 auf eine zweite Gewindespindel S25 mit einer zweiten Gewindemutter S34 übertragen. Die zweite Gewindespindel S25 ist drehbar auf dem Planschlitten S3 gehalten, wobei die zweite Gewindemutter S34 drehfest mit dem Oberschlitten S3 verbunden ist. Durch Drehung der zweiten Gewindespindel S25 in der feststehenden zweiten Gewindemutter S34 erfolgt eine axiale Verschiebung der zweiten Gewindemutter S34 entlang der zweiten Gewindespindel S25 und somit ein Verfahren des Oberschlitten S3 entlang der z0-Achse z0.

Gemäß der Erfindung weist die Drehmaschine eine Bremsvorrichtung zur Einwirkung auf die Drehung eines Handrads auf. Die Drehmaschine D gemäß der dargestellten vorteilhaften Ausführung der Erfindung weist für jedes der Handräder eine Bremsvorrichtung auf. Die Drehmaschine D weist die erste Bremsvorrichtung S13, die über die erste Welle S12 auf die Drehung des ersten Handrads S11 einwirkt, die zweite Bremsvorrichtung S23, die über die zweite Welle S22 auf die Drehung des zweiten Handrads S21 einwirkt, und die dritte Bremsvorrichtung S33, die über die dritte Welle S32 auf die Drehung des dritten Handrads S31 einwirkt, auf. Die Bremsvorrichtungen S13, S23, S33 sind in Fig. 1 ebenfalls nur schematisch dargestellt. Die Bremsvorrichtungen sind besonders vorteilhaft als magnetische Bremsvorrichtungen, insbesondere als Magnetpulverbremsen mit Remanentrotor, ausgeführt. Der Rotor kann unmittelbar auf den Wellen der Handräder angeordnet sein oder mit diesen über einen Abtrieb rotatorisch gekoppelt sein. In der dargestellten vorteilhaften Ausführung der Erfindung sind die Bremsvorrichtungen dauerhaft mit den jeweiligen Handrädern gekoppelt, sodass jederzeit eine Bremswirkung auf die Handräder ausgeübt werden kann. Die Bremsvorrichtungen können auch so ausgeführt sein, dass diese nicht dauerhaft mit den Handrädern gekoppelt sind, sondern nur bei Bedarf gekoppelt werden können.

Die Drehmaschine D ist vorteilhaft als sogenannte "konventionelle Drehmaschine" mit einer Zugspindel D22 ausgeführt. Über die Zugspindel D22 sind der Bettschlitten S1 und der Planschlitten S2 motorisch angetrieben entlang der jeweiligen Achse verfahrbar. Hierfür weist die Drehmaschine D am Bettschlitten S1 ein Vorschubgetriebe G auf. Das Vorschubgetriebe G und dessen Komponenten sind in Fig. 1 ebenfalls nur schematisch dargestellt. Über das Vorschubgetriebe G ist die Drehbewegung der Zugspindel D22 auf einen Schlitten übertragbar, sodass der jeweilige Schlitten entlang der jeweiligen Achse motorisch verfahrbar ist. Hierfür weist das Vorschubgetriebe G eine Hülse G1 auf, die auf der Zugspindel D22 angeordnet ist, zu dieser verdrehfest und entlang dieser mit dem Bettschlitten S1 verschiebbar ist. Über die Hülse G1 wird somit die Drehbewegung der Zugspindel D22 in das Getriebe G eingeleitet. Die Hülse G1 ist mit einem radial zur Zugspindel D22 angeordneten ersten Kegelrad G2 drehfest verbunden. Dieses ist mit einem zweiten Kegelrad G3 in kämmendem Eingriff, das mit einer vierten Welle G4 fest verbunden ist. Auf der vierten Welle G4 ist verdrehfest und verschiebbar ein zweites Zahnrad G5 angeordnet. Je nach Position des zweiten Zahnrads G5 auf der vierten Welle G4 erfolgt eine Übertragung der Drehung der Zugspindel D22 auf die erste Welle S12 zum motorischen Verfahren des Bettschlittens S1 in der Verfahrrichtung Sz entlang der z-Achse z oder des Planschlittens S2 in der Verfahrrichtung Sx entlang der x-Achse x. In der in Fig. 1 dargestellten Schaltstellung ist das zweite Zahnrad G5 auf der vierten Welle G4 so positioniert, dass das zweite Zahnrad G5 mit dem vierten Zahnrad G7, das auf der zweiten Welle S22 angeordnet ist, in kämmendem Eingriff ist. Die Drehbewegung der Zugspindel D22 wird somit auf die erste Gewindespindel S15 übertragen, sodass der Planschlitten S2 in der Verfahrrichtung Sx entlang der x-Achse x automatisch verfahrbar ist. Für ein automatisches Verfahren des Bettschlittens S1 in der Verfahrrichtung Sz entlang der z-Achse z würde das zweite Zahnrad G5 auf der vierten Welle G4 so verschoben, dass das zweite Zahnrad G5 mit dem dritten Zahnrad G6, das auf der ersten Welle S12 angeordnet ist, in Eingriff ist.

Die Drehmaschine D weist weiterhin eine Steuerung D3 für die Einwirkung der Bremsvorrichtungen S13, S23, S33 und einen Datenspeicher D31 auf. Die Steuerung D3 und der Datenspeicher D31 sind in Fig. 1 nur schematisch dargestellt. Die Steuerung D3 ermöglicht eine kontrollierte Veränderung der Einwirkung der Bremsvorrichtungen S13, S23, S33. Hierfür können in dem Datenspeicher D31 Parameter hinterlegt sein, die die Steuerung D3 bei der Anpassung der Einwirkung der Bremsvorrichtungen S13, S23, S33 verarbeitet.

Die Drehmaschine D weist weiterhin ein Messsystem M für die Positionen der Schlitten entlang der jeweiligen Achsen auf. Das Messsystem M weist eine erste Messachse M1 entlang der z-Achse z mit einem am Maschinenbett gehaltenen ersten Messlineal M11 und einem am Bettschlitten S1 gehaltenen ersten Messsensor M12 auf. Das Messsystem M weist weiterhin eine zweite Messachse M2 entlang der x-Achse x mit einem am Planschlitten S2 gehaltenen zweiten Messlineal M21 und einem am Bettschlitten S1 gehaltenen zweiten Messsensor M22 auf. Das Messsystem M weist außerdem eine dritte Messachse M3 entlang der z0-Achse z0 mit einem am Oberschlitten S3 gehaltenen dritten Messlineal M31 und einem am Planschlitten S2 gehaltenen dritten Messsensor M32 auf. Die Messsensoren M12, M22, M23 erfassen deren Relativbewegung zu dem jeweils zugehörigen Messlineal M11, M21, M31 und übertragen ein Signal für das Maß der Relativbewegung an die Steuerung D3. Die Datenverbindungen zwischen den einzelnen Komponenten sind in Fig. 1 zur Verbesserung der Übersichtlichkeit nicht dargestellt.

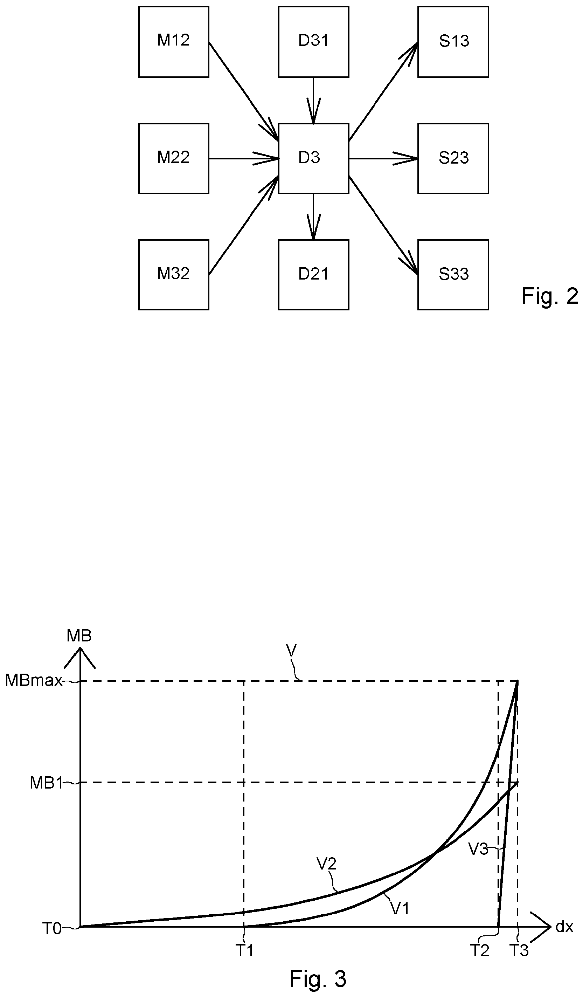

In Fig. 2 sind als schematisches Schaltbild die Datenverbindungen zwischen den elektronischen Komponenten der Drehmaschine D dargestellt. Der erste Messsensor M12, der zweite Messsensor M22 und der dritte Messsensor M32 sind datenmäßig mit der Steuerung D3 verbunden. Die Steuerung D3 kann somit die Position der Schlitten entlang der jeweiligen Achse erfassen. Die Datenverbindungen sind jeweils nur symbolhaft mit einem Pfeil dargestellt. Die Steuerung D3 ist weiterhin datenmäßig mit einem Datenspeicher D31 für Steuer- und Vorschubparameter verbunden. Diese können durch die Steuerung D3 verarbeitet und berücksichtigt werden. Die Steuerung D3 ist weiterhin datenmäßig mit dem Elektromotor D21 zum Antrieb der Zugspindel verbunden. So ist ein geregeltes motorisches Verfahren von Bettschlitten und Planschlitten entlang deren Achsen möglich. Die Steuerung D3 ist außerdem datenmäßig mit der ersten Bremsvorrichtung S13 für das erste Handrad der z-Achse, mit der zweiten Bremsvorrichtung S23 für das zweite Handrad der x-Achse und mit der dritten Bremsvorrichtung S33 für das dritte Handrad der z0-Achse verbunden. Die Steuerung D3 kann somit die Einwirkung der Bremsvorrichtungen abhängig von den erfassten Ist-Positionen der Schlitten S1, S2, S3 und den im Datenspeicher D31 hinterlegten Parametern steuern.

In Fig. 3 ist ein Kennliniendiagramm V mit beispielhaften Kennlinien dargestellt, die den Verlauf der Einwirkung MB der Bremsvorrichtungen in Abhängigkeit der Abweichung, insbesondere in Abhängigkeit der Koordinatenabweichung dx entlang der x-Achse x festlegen. Die Einwirkung kann als Ausübung eines Bremsmoments auf die Drehung eines Handrads erfolgen. Die erste beispielhafte Kennlinie V1 beginnt am ersten Differenzwert T1 mit einer Einwirkung von null und steigt dann bogenförmig bis zum Differenzwert T3 an, an dem die Einwirkung eine maximale Einwirkung MBmax einnimmt. Gemäß dem Verlauf der ersten beispielhaften Kennlinie V1 erfolgt somit bis zum Erreichen des ersten Differenzwerts T1 keine Einwirkung auf eine Bremsvorrichtung und ab dem ersten Differenzwert T1 ein kontinuierlicher Anstieg der Einwirkung bis zu einem Maximalwert MBmax am maximalen dritten Differenzwert T3, der eine Stillsetzung des jeweils zugehörigen Handrads bewirkt.

Die zweite beispielhafte Kennlinie V2 beginnt im Ursprung des Diagramms T0. Die Einwirkung steigt bis zu dem ersten Differenzwert T1 nur gering an. Ab diesem Wert erfolgt ein moderat kontinuierlicher Anstieg der Einwirkung bis zu einer ersten beispielhaften Einwirkung MB1 am maximalen dritten Differenzwert T3. Gemäß dem Verlauf der zweiten beispielhaften Kennlinie V2 erfolgt bereits ab Auftreten einer Differenz eine geringfügige Einwirkung, die ab dem ersten Differenzwert T1 dann stärker, jedoch nur bis zu der ersten beispielhaften Einwirkung MB1, die geringer ist als die maximale Einwirkung MBmax, ansteigt. Es erfolgt somit bei Erreichen der Differenz durch eine Achse keine vollständige Stillsetzung des jeweiligen Handrads. Dieses ist vielmehr durch einen Bediener unter Kraftaufbringung zur Überwindung der Einwirkung der Bremsvorrichtung weiter drehbar.

Die dritte beispielhafte Kennlinie V3 beginnt erst an dem zweiten Differenzwert T2, der knapp vor dem maximalen dritten Differenzwert T3 angeordnet ist. Die Einwirkung steigt zwischen dem zweiten und dritten Differenzwert T2, T3 von null steil bis auf eine maximale Einwirkung MBmax an. Gemäß dem Verlauf der dritten beispielhaften Kennlinie V3 erfolgt mit steigender Abweichung zunächst keine Einwirkung, und erst am zweiten Differenzwert T2 kurz vor Erreichen des maximalen dritten Differenzwerts T3 erfolgt eine annähernd sprunghafte Erhöhung der Einwirkung bis auf eine maximale Einwirkung MBmax, sodass das zugehörige Handrad stillgesetzt wird. Der Differenzwert T3 ist somit ein Maximalwert für eine zulässige Abweichung, mit dessen Erreichen das Handrad durch die Bremsvorrichtung stillgesetzt wird, sodass dieser vorteilhaft nicht überschritten wird.

Für weitere vorteilhafte Ausführungen der Erfindung können die Kennlinien auch andere als die dargestellten Verläufe aufweisen, z.B. andere bogenartige Verläufe oder treppenartige Verläufe mit diskreten Wertsprüngen. Die Verwendung von Kennlinien zur Steuerung der Einwirkung der Bremsvorrichtungen ermöglicht eine vielfältige, bedarfsgerechte Anpassung des Ansprech- und Bremsverhaltens der Bremsvorrichtungen.

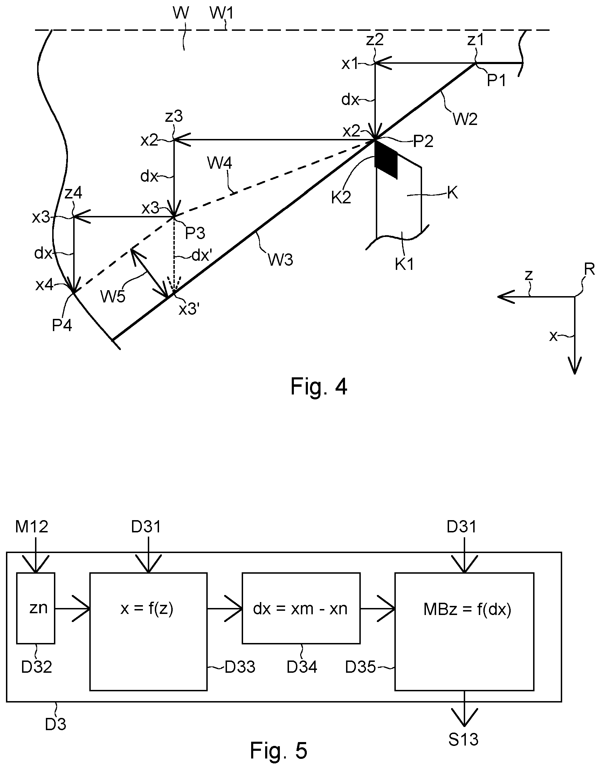

In Fig. 4 ist schematisch der Bearbeitungsablauf des Werkstücks W mit einer vorteilhaften, gemäß der Erfindung ausgeführten Drehmaschine gemäß Fig. 1 dargestellt. Zur Verbesserung der Erkennbarkeit ist die Drehmaschine nicht erneut dargestellt. Weiterhin ist das Werkstück W ebenfalls nur abschnittsweise dargestellt. In Fig. 5 ist ein schematisches Ablaufdiagramm der speziellen Funktionsweise der Steuerung D3 bei der Bearbeitung des Werkstücks W dargestellt. Fig. 4 und Fig. 5 sind daher in Zusammenschau beschrieben.

Wie bereits in Bezug auf Fig. 1 dargelegt, sind der erste Schlitten, also der Bettschlitten, durch Drehung des zugehörigen ersten Handrads durch einen Bediener manuell entlang der z-Achse und der zweite Schlitten, also der Planschlitten, mittels einem Elektromotor, der Zugspindel und Getriebe antreibt, motorisch entlang der x-Achse verfahrbar.

Das Werkstück W weist in der von der x-Achse x und der z-Achse z des Koordinatensystems R aufgespannten Ebene eine schräge Bearbeitungskontur W2 auf. Bei Rotation der schrägen Bearbeitungskontur W2 um die Mittelachse W1 ergibt sich die Kegelkontur des Werkstücks W. Die Mittelachse W1 verläuft somit vorteilhaft entlang der Hauptspindel der Drehmaschine.

Zur Herstellung der schrägen Bearbeitungskontur W2 leitet die Steuerung unter Berücksichtigung des im Datenspeicher hinterlegten Datensatzes, der den Verlauf der schrägen Bearbeitungskontur in der von der manuell verfahrbaren und der motorisch angetriebenen Achse aufgespannten Ebene beschreibt, abhängig von der Ist-Position des Bettschlittens entlang der manuell verfahrbaren z-Achse z Positionen für den Planschlitten entlang der motorisch verfahrbaren x-Achse x ab und führt den Planschlitten dorthin automatisch nach. Das Drehwerkzeug K wird somit schräg entlang der Bearbeitungskontur W2 bewegt. Die makroskopisch gerade Bearbeitungskontur W2 ist in Fig. 5 mit einer dicken Linie dargestellt. Mikroskopisch weist die schräge Bearbeitungskontur eine Vielzahl kleiner stufenartiger Absätze auf, die durch wechselseitige Bewegungen der beiden Achsen gebildet werden. Diese mikroskopisch treppenstufenähnliche Bewegung der Achsen ist in Fig. 5 schematisch und für eine bessere Erkennbarkeit stark vergrößert dargestellt. Das Drehwerkzeug K, das in den Figuren beispielhaft als Werkzeughalter K1 mit Schneidplatte K2 dargestellt ist, ist nur schematisch dargestellt und nicht maßstabsgetreu zu den dargestellten Achsbewegungen.

In Fig. 5 sind entlang der Bearbeitungskontur W2 drei beispielhafte Steuerzyklen dargestellt, in denen jeweils von der Steuerung D3 die Steuerschritte D32, D33, D34, D35 durchlaufen werden. Bei den Berechnungsvorschriften der einzelnen Steuerschritte sind aufeinander folgende Koordinatenwerte entlang einer Achse in allgemeiner Weise mit den Indexen m und an angegeben. Somit folgt auf eine x-Koordinate xn eine darauffolgende x-Koordinate xm und auf eine z-Koordinate zn eine darauffolgende z-Koordinate zm.

Der erste Steuerzyklus wird zwischen dem ersten beispielhaften Konturpunkt P1 und dem zweiten beispielhaften Konturpunkt P2 durchlaufen. Das Drehwerkzeug K ist an dem beispielhaften Konturpunkt P1 mit der ersten x-Koordinate x1 und der ersten z-Koordinate z1 platziert. Der Bettschlitten wird durch einen Bediener entlang der z-Achse von der ersten z-Koordinate z1 zu der zweiten z-Koordinate z2 manuell verfahren. Diese wird in dem ersten Steuerschritt D32 mittels des ersten Messsensors M12 erfasst. In dem zweiten Steuerschritt D33 erfolgt unter Berücksichtigung des im Datenspeicher D31 hinterlegten, den Verlauf der Bearbeitungskontur W2 beschreibenden Datensatzes die Berechnung einer der zweiten z-Koordinate z2 entsprechenden zweiten x-Koordinate x2. In dem dritten Steuerschritt D34 erfolgt die Bestimmung der Koordinatenabweichung dx zwischen der zweiten x-Koordinate x2 und der ersten x-Koordinate x1. Diese wird vorteilhaft durch Subtraktion der der ersten x-Koordinate x1 von der zweiten x-Koordinate x2 gebildet. Der Planschlitten wird durch die Steuerung automatisch um die Koordinatenabweichung dx zu der zweiten x-Koordinate x2 nachgeführt. In dem vierten Steuerschritt D35 erfolgt anhand der im Datenspeicher D31 gespeicherten Daten, die den Zusammenhang zwischen der Bremswirkung für das Handrad der z-Achse und der Koordinatenabweichung dx entlang der x-Achse beschreiben, die Ableitung einer Einwirkung MBz für die erste Bremsvorrichtung am Handrad für die z-Achse. In dem dargestellten Ausführungsbeispiel sind die Daten so beschaffen, dass für die sich ergebende Koordinatenabweichung dx des ersten Steuerzyklus keine Einwirkung auf die erste Bremsvorrichtung erfolgt.

Der zweite Steuerzyklus wird danach zwischen dem zweiten beispielhaften Konturpunkt P2 und dem dritten beispielhaften Konturpunkt P3 durchlaufen. Der Bettschlitten wird durch einen Bediener entlang der z-Achse von der zweiten z-Koordinate z2 zu der dritten z-Koordinate z3 manuell verfahren. Dies erfolgt mit einer höheren Drehgeschwindigkeit des Handrads, sodass der Bettschlitten während der Dauer des zweiten Steuerzyklus um eine weitere Strecke entlang der z-Achse z als während der Dauer des ersten Steuerzyklus manuell verfahren wird. Dies ist in Fig. 4 schematisch mit einem größeren Abstand zwischen der zweiten z-Koordinate z2 und der dritten z-Koordinate z3 als zwischen der ersten z-Koordinate z1 und der zweiten z-Koordinate Z2 dargestellt. In dem ersten Steuerschritt D32 wird mittels des ersten Messsensors M12 die dritte z-Koordinate z3 erfasst und in dem zweiten Steuerschritt D33 eine der dritten z-Koordinate z3 entsprechende theoretische dritte x-Koordinate x3' berechnet. In dem dritten Steuerschritt D33 erfolgt die Bestimmung der Koordinatenabweichung zwischen der theoretischen dritten x-Koordinate x3' und der zweiten x-Koordinate x2. Die so berechnete theoretische Koordinatenabweichung dx', um die eine automatische Nachführung des Planschlittens zur Aufrechterhaltung der ersten Bearbeitungskontur W12 notwendig wäre, ist ebenfalls deutlich länger als die Koordinatenabweichung während des ersten Steuerzyklus.

Aus Sicherheitsgründen weist die vorteilhaft als konventionelle Drehmaschine mit einer Zugspindel ausgeführte Drehmaschine D eine Beschränkung der maximalen automatischen Verfahrgeschwindigkeit eines Schlittens entlang einer Achse auf. Infolgedessen ist die automatische Nachführung des Planschlittens entlang der x-Achse x während der Dauer des Steuerzyklus um die theoretische Koordinatenabweichung dx' bis zu der theoretischen dritten x-Koordinate x3' durch die Steuerung nicht möglich, sondern nur um die Koordinatenabweichung dx bis zu der dritten x-Koordinate x3. Der dritte beispielhafte Konturpunkt P3 liegt somit auf einer fehlerhaften Kontur W4, die von der Sollkontur W3 um den Konturfehler W5 abweicht.

In dem vierten Steuerschritt D35 des zweiten Steuerzyklus erfolgt wieder anhand der im Datenspeicher D31 gespeicherten Daten die Ableitung einer Einwirkung für die erste Bremsvorrichtung am Handrad für die z-Achse. In dem dargestellten Ausführungsbeispiel sind die Daten so beschaffen, dass für die sich ergebende theoretische Koordinatenabweichung dx', die aufgrund der Geschwindigkeitsbeschränkung in der Drehmaschine D während des zweiten Steuerzyklus nicht erzielbar ist, eine Einwirkung auf die erste Bremsvorrichtung vorgesehen ist. Die so abgeleitete Einwirkung wird von der ersten Bremsvorrichtung S13 als Bremsmoment auf das Handrad für die z-Achse z ausgeübt. Die Drehgeschwindigkeit des Handrads und somit die Verfahrgeschwindigkeit des Bettschlittens entlang der z-Achse z wird so reduziert.

Dabei kann die Einwirkung der ersten Bremsvorrichtung von Steuerzyklus zu Steuerzyklus vorteilhaft derart kontinuierlich weiter gesteigert werden, dass die Abweichung zwischen der Ist-Position und der Soll-Position des zweiten Schlittens entlang der x-Achse einen im Datenspeicher der Steuerung hinterlegten Maximalwert für die Abweichung zwischen der Ist-Position und der Soll-Position des zweiten Schlittens entlang der x-Achse nicht überschreitet.

Der darauffolgende dritte Steuerzyklus wird zwischen dem dritten beispielhaften Konturpunkt P3 und dem vierten beispielhaften Konturpunkt P4 durchlaufen. Aufgrund der auf das Handrad für die z-Achse ausgeübten Bremswirkung wird der Bettschlitten durch einen Bediener entlang der z-Achse von der dritten z-Koordinate z3 wieder mit einer geringeren Geschwindigkeit zu der vierten z-Koordinate z4 manuell verfahren. Dies ist in Fig. 4 schematisch mit einem kleineren Abstand zwischen der dritten z-Koordinate z3 und der vierten z-Koordinate z4 als zwischen der zweiten z-Koordinate z2 und der dritten z-Koordinate z3 dargestellt. Die vierte z-Koordinate z4 wird in dem ersten Steuerschritt D32 mittels des ersten Messsensors M12 erfasst. In dem zweiten Steuerschritt D33 erfolgt unter Berücksichtigung des im Datenspeicher D32 hinterlegten, den Verlauf der Bearbeitungskontur W2 beschreibenden Datensatzes die Berechnung einer der vierten z-Koordinate z4 entsprechenden vierten x-Koordinate x4. In dem dritten Steuerschritt D34 erfolgt die Bestimmung der Koordinatenabweichung dx zwischen der vierten x-Koordinate x4 und der dritten x-Koordinate x3. Der Planschlitten wird durch die Steuerung automatisch um die Koordinatenabweichung dx zu der vierten x-Koordinate x4 nachgeführt. Die Koordinatenabweichung dx weist im dritten Steuerzyklus somit wieder so eine Länge auf, dass eine automatische Nachführung durch die Steuerung unter Berücksichtigung der maximalen Achsgeschwindigkeit zu der berechneten Endkoordinate möglich ist. Der vierte beispielhafte Konturpunkt P4 weist somit zumindest wieder dieselbe Richtung wie die Sollkontur W3 auf, sodass ein unerwünschtes weiteres Ansteigen des Konturfehlers W5 vorteilhaft reduziert ist. In dem vierten Steuerschritt D34 erfolgt wieder die Ableitung einer Einwirkung für die erste Bremsvorrichtung am Handrad für die z-Achse. Da das manuelle Verfahren der z-Achse durch einen Bediener in dem dritten Steuerzyklus wieder mit einer niedrigeren Geschwindigkeit erfolgt, die zumindest eine zur Sollkontur W3 parallele, und somit richtungsgetreue automatische Nachführung der x-Achse zulässt, erfolgt in dem darauffolgenden, nicht mehr dargestellten Steuerzyklus keine Einwirkung der ersten Bremsvorrichtung auf das Handrad für die z-Achse.

Der in Fig. 4 und Fig. 5 beschriebene Ablauf ist idealisiert beschrieben und verläuft in Realität hochdynamisch, wobei einzelne, vorstehend seriell beschriebene Schritte und Achsbewegungen dynamisch ineinander übergehen können.

Die in der vorteilhaften Ausführung der Erfindung dargestellte Achszuordnung, also eine manuelle Bewegung der z-Achse und eine automatische Nachführung der x-Achse, ist rein beispielhaft und kann ebenfalls in getauschter Zuordnung erfolgen. Weiterhin kann die Erfindung auch bei Drehmaschinen mit elektronischen Handrädern eingesetzt werden.

### Bezugszeichenliste

- D: Drehmaschine
- D1: Spindelstock
- D11: Hauptspindel
- D2: Vorschubantrieb
- D21: regelbarer Elektromotor
- D22: Zugspindel
- D3: Steuerung
- D31: Datenspeicher
- D32: erster Steuerschritt
- D33: zweiter Steuerschritt
- D34: dritter Steuerschritt
- D35: vierter Steuerschritt
- D4: Maschinenbett
- D41: Zahnstange
- S: Werkzeugschlitten
- S1: Bettschlitten
- S11: erstes Handrad
- S12: erste Welle
- S13: erste regelbare Bremsvorrichtung
- S14: erstes Zahnrad
- S15: erste Gewindespindel entlang der x-Achse x
- Sz: Verfahrrichtung Bettschlitten entlang der z-Achse z
- S2: Planschlitten
- S21: zweites Handrad
- S22: zweite Welle
- S23: zweite regelbare Bremsvorrichtung
- S24: erste Gewindemutter
- S25: zweite Gewindespindel, in z0-Richtung
- Sx: Verfahrrichtung Bettschlitten entlang der x-Achse x
- S3: Oberschlitten
- S31: drittes Handrad
- S32: dritte Welle
- S33: dritte regelbare Bremsvorrichtung
- S34: zweite Gewindemutter
- Sz0: Verfahrrichtung Bettschlitten entlang der z0-Achse z0
- G: Vorschubgetriebe
- G1: Hülse, verdrehfest verschiebbar auf Zugspindel D22
- G2: erstes Kegelrad, an Hülse G1
- G3: zweites Kegelrad
- G4: vierte Welle
- G5: zweites Zahnrad, verdrehfest verschiebbar auf vierter Welle G4
- G6: drittes Zahnrad, fest auf erster Welle S12
- G7: viertes Zahnrad, fest auf zweiter Welle S22
- M: Messsystem
- M1: erste Messachse entlang der z-Achse z
- M11: erstes Messlineal
- M12: erster Messsensor
- M2: zweite Messachse entlang der x-Achse x
- M21: zweites Messlineal
- M22: zweiter Messsensor
- M3: dritte Messachse entlang der z0-Achse z0
- M31: drittes Messlineal
- M32: dritter Messsensor
- K: Drehwerkzeug
- K1: Werkzeughalter
- K2: Schneidplatte
- W: Werkstück
- W1: Mittelachse
- W2: Bearbeitungskontur, insbesondere Kegelkontur
- W3: Sollkontur
- W4: fehlerhafte Kontur
- W5: Konturfehler
- V: Kennliniendiagramm
- V1: erste beispielhafte Kennlinie
- V2: zweite beispielhafte Kennlinie
- V3: dritte beispielhafte Kennlinie
- T0: Ursprung des Diagramms
- T1: erster Differenzwert
- T2: zweiter Differenzwert
- T3: dritter Differenzwert
- R: Koordinatensystem
- z: z-Achse
- x: x-Achse
- z0: z0-Achse
- xn: x-Koordinate
- xm: darauffolgende x-Koordinate
- zn: z-Koordinate
- zm: darauffolgende z-Koordinate
- x1: erste x-Koordinate
- x2: zweite x-Koordinate
- x3: dritte x-Koordinate
- x3': theoretische dritte x-Koordinate
- x4: vierte x-Koordinate
- z1: erste z-Koordinate
- z2: zweite z-Koordinate
- z3: dritte z-Koordinate
- z4: vierte z-Koordinate
- dx: Koordinatenabweichung entlang der x-Achse
- dx': theoretische Koordinatenabweichung
- MB: Einwirkung, insbesondere Bremsmoment
- MBz: Einwirkung, insbesondere Bremsmoment für die Kurbelbewegung der z-Achse
- MB1: erste beispielhafte Einwirkung, insbesondere Bremsmoment
- MBmax: maximale Einwirkung, insbesondere maximales Bremsmoment
- P1: erster beispielhafter Konturpunkt
- P2: zweiter beispielhafter Konturpunkt
- P3: dritter beispielhafter Konturpunkt
- P4: vierter beispielhafter Konturpunkt

## Patentansprüche

1. Drehmaschine (D), mit
- einem ersten Schlitten (S1, S3), der durch Drehung eines Handrads (S11, S31) entlang einer ersten Achse (z, z0) manuell verfahrbar ist,
- einem Messsystem (M) für die Ist-Position des ersten Schlittens (S1, S3) entlang der ersten Achse (z, z0),
- einem zweiten Schlitten (S2), der entlang einer zweiten Achse (x) quer zu der ersten Achse (z, z0) motorisch verfahrbar ist, und
- einer Steuerung (D3), die
- einen Datensatz für den Verlauf einer Schräge in der von der ersten und zweiten Achse (z, z0, x) aufgespannten Ebene enthält, und
- unter Berücksichtigung des Datensatzes abhängig von der Ist-Position des ersten Schlittens (S1, S3) entlang der ersten Achse (z, z0) Soll-Positionen für den zweiten Schlitten (S2) entlang der zweiten Achse (x) ableitet und diesen dorthin automatisch nachführt,
**gekennzeichnet durch**
- eine Bremsvorrichtung (S13, S33) zur Einwirkung auf die Drehung des Handrads (S11, S31), wobei
- die Steuerung (D3) die Einwirkung der Bremsvorrichtung (S13, S33) abhängig von der Abweichung (dx) zwischen der Ist-Position und der Soll-Position des zweiten Schlittens (S2) entlang der zweiten Achse (x) steuert.

2. Drehmaschine (D) nach Anspruch 1, wobei
die Steuerung (D3) die Einwirkung der Bremsvorrichtung (S13, S33) derart steuert, dass diese mit der Abweichung zwischen der Ist-Position und der Soll-Position des zweiten Schlittens (S2) entlang der zweiten Achse (x) ansteigt.

3. Drehmaschine (D) nach Anspruch 1 oder 2, wobei
- die Steuerung (D3) einen Maximalwert für die Abweichung zwischen der Ist-Position und der Soll-Position des zweiten Schlittens (S2) entlang der zweiten Achse (x) enthält, und
- die Einwirkung der Bremsvorrichtung (S13, S33) derart steuert, dass die Abweichung zwischen der Ist-Position und der Soll-Position des zweiten Schlittens (S2) entlang der zweiten Achse (x) den Maximalwert nicht überschreitet.

4. Drehmaschine (D) nach Anspruch 1, 2 oder 3, wobei
die Abweichung die mathematische Differenz aus der Ist-Position und der Soll-Position des zweiten Schlittens (S2) entlang der zweiten Achse (x) ist.

5. Drehmaschine (D) nach einem der vorangegangenen Ansprüche, wobei
die erste Achse (z, z0) entlang einer Mittelachse (W11) einer Hauptspindel (D11) der Drehmaschine (D) verläuft.

6. Drehmaschine (D) nach einem der vorangegangenen Ansprüche, mit
einer magnetischen Bremsvorrichtung (S13, S33).

7. Drehmaschine (D) nach Anspruch 6, mit
einer Magnetpulverbremse als magnetische Bremsvorrichtung (S13, S33).

8. Drehmaschine (D) nach einem der vorangegangenen Ansprüche, mit
einer Zugspindel (D22).

## Claims

1. Lathe (D), with
- a first slide (S1, S3), that is manually movable along a first axis (z, z0) by rotation of a hand wheel (S11, S31),
- a measuring system (M) for the current position of the first slide (S1, S3) along the first axis (z, z0),
- a second slide (S2), that is motorically movable along a second axis (x) perpendicular to the first axis (z, z0), and
- a controller (D3), that
- contains a data set for the course of a slope in the plane spanned by the first and second axes (z, z0, x), and
- by taking into account the data set and depending on the current position of the first slide (S1, S3) derives required positions for the second slide (S2) along the second axis (x) and automatically guides it to there,
**characterized by**
- a braking device (S13, S33) for effecting the rotation of the hand wheel (S11, S31), whereby
- the controller (D3) controls the effect of the braking device (S13, S33) based on the deviation (dx) between the current position and the required position of the second slide (S2) along the second axis (x).

2. Lathe (D) according to claim 1, wherein
the controller (D3) controls the effect of the braking device (S13, S33) in such a way that it increases with the deviation between the current position and the required position of the second slide (S2) along the second axis (x).

3. Lathe (D) according to claim 1 or 2, wherein
- the controller (D3) contains a maximum value for the deviation between the current position and the required position of the second slide (S2) along the second axis (x), and
- controls the effect of the braking device (S13, S33) in such a way that the deviation between the current position and the required position of the second slide (S2) along the second axis (x) does not exceed the maximum value.

4. Lathe (D) according to 1, 2 or 3, wherein
the deviation is the mathematical difference between the current position and the required position of the second slide (S2) along the second axis (x).

5. Lathe (D) according to one of the preceding claims, wherein
the first axis (z, z0) extends along the middle axis (W11) of a main spindle (D11) of the lathe (D).

6. Lathe (D) according to one of the preceding claims, with
a magnetic braking device (S13, S33).

7. Lathe (D) according to 6, with
a magnetic particle brake as magnetic braking device (S13, S33).

8. Lathe (D) according to one of the preceding claims, with
a feed rod (D22).

## Revendications

1. Tour (D), comportant
- un premier chariot (S1, S3) qui peut être déplacé manuellement le long d'un premier axe (z, z0) par la rotation d'un volant (S11, S31),
- un système de mesure (M) de la position réelle du premier chariot (S1, S3) le long du premier axe (z, z0),
- un second chariot (S2) qui peut être déplacé par un moteur le long d'un second axe (x) transversal au premier axe (z, z0), et
- une commande (D3) qui
- contient un jeu de données pour le tracé d'une pente dans le plan défini par les premier et second axes (z, z0, x), et
- en tenant compte du jeu de données, en fonction de la position réelle du premier chariot (S1, S3) le long du premier axe (z, z0), déduit des positions de consigne pour le second chariot (S2) le long du second axe (x) et amène automatiquement ledit second chariot à celles-ci,
**caractérisé par**
- un dispositif de freinage (S13, S33) permettant d'agir sur la rotation du volant (S11, S31), dans lequel
- la commande (D3) commande l'action du dispositif de freinage (S13, S33) en fonction de l'écart (dx) entre la position réelle et la position de consigne du second chariot (S2) le long du second axe (x).

2. Tour (D) selon la revendication 1, dans lequel
la commande (D3) commande l'action du dispositif de freinage (S13, S33) de telle sorte qu'elle augmente avec l'écart entre la position réelle et la position de consigne du second chariot (S2) le long du second axe (x).

3. Tour (D) selon la revendication 1 ou 2, dans lequel
- la commande (D3) contient une valeur maximale pour l'écart entre la position réelle et la position de consigne du second chariot (S2) le long du second axe (x), et
- commande l'action du dispositif de freinage (S13, S33) de telle sorte que l'écart entre la position réelle et la position de consigne du second chariot (S2) le long du second axe (x) ne dépasse pas la valeur maximale.

4. Tour (D) selon la revendication 1, 2 ou 3, dans lequel
l'écart est la différence mathématique entre la position réelle et la position de consigne du second chariot (S2) le long du second axe (x).

5. Tour (D) selon l'une des revendications précédentes, dans lequel
le premier axe (z, z0) s'étend le long d'un axe central (W11) d'une broche principale (D11) du tour (D).

6. Tour (D) selon l'une des revendications précédentes, comportant
un dispositif de freinage magnétique (S13, S33).

7. Tour (D) selon la revendication 6, comportant
un frein à poudre magnétique en tant que dispositif de freinage magnétique (S13, S33).

8. Tour (D) selon l'une des revendications précédentes, comportant
une broche de traction (D22).
